(19) **Europäisches Patentamt / European Patent Office / Office européen des brevets**

(11) **EP 4 722 836 A1**

(12) # EUROPEAN PATENT APPLICATION
published in accordance with Art. 153(4) EPC

(43) Date of publication:
**08.04.2026 Bulletin 2026/15**

(21) Application number: **23938126.2**

(22) Date of filing: **09.08.2023**

(51) International Patent Classification (IPC):
***G05D*** (2006.01)

(52) Cooperative Patent Classification (CPC):
**G05D 1/661; G01S 19/396; G05D 1/248;**
G01S 19/072; G05D 2105/15; G05D 2107/23;
G05D 2109/10; Y02P 90/02

(86) International application number:
**PCT/CN2023/111964**

(87) International publication number:
**WO 2024/239457 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.05.2023 CN 202310598216**

(71) Applicant: **Zhejiang Sunseeker Industrial Co., Ltd.
Jinhua, Zhejiang 321042 (CN)**

(72) Inventors:
• **FEI, Tao
Jinhua, Zhejiang 321042 (CN)**
• **YAO, Yongzhe
Jinhua, Zhejiang 321042 (CN)**

(74) Representative: **Manna, Sara et al
Società Italiana Brevetti S.p.A.
Piazza di Pietra, 39
00186 Roma (IT)**

(54) **CONTROL METHOD AND APPARATUS FOR AUTONOMOUS OPERATION SYSTEM, DEVICE, AND STORAGE MEDIUM**

(57)    The present application discloses a control method and apparatus for an autonomous operation system, a device, and a storage medium. The method comprises: determining the position of an autonomous operation system, wherein the autonomous operation system comprises a positioning apparatus; and acquiring ionosphere parameters on the basis of the position, and controlling the autonomous operation system according to the ionosphere parameters. The ionospheric parameters are obtained, and then a device state is further determined according to the ionospheric parameters; the device state comprises meeting a positioning requirement and not meeting the positioning requirement; a device is made to merely work in the case where the positioning requirement is met, to avoid the effect of ionospheric disturbance on the autonomous operation system, thereby ensuring the accuracy and stability of system positioning; in addition, when the system meets the positioning requirement, the priority index of each corresponding task partition can be further calculated, then a working process is determined according to the priority index, and finally an autonomous operation device is controlled to work according to the working process, thereby ensuring the working accuracy of the device and improving the working efficiency of the device.

## Description

### TECHNICAL FIELD

The present application relates to the field of device control technologies, and in particular, to a control method and apparatus for an autonomous operation system, a device, and a storage medium.

### BACKGROUND

The ionosphere is a part of the earth's high-altitude atmosphere, extending from 60 km to about 1000 km. Within this range, the radiation is mainly the sun's ultraviolet radiation and high-energy particle radiation, which partially dissociates atmospheric molecules and forms a plasma composed of free electrons, positive and negative ions, neutral molecules and atoms.

The ionosphere is not only affected by solar activity and geomagnetic activity from the upper layers, but is also coupled with the coexisting thermosphere. The atmospheric activities in the lower layers will also disturb the ionosphere. When the ionosphere is disturbed, the electron density will change. At this time, it will have an impact on the performance of long-distance shortwave communications, satellite communications and navigation positioning, and ultra-shortwave line-of-sight radar systems, and spacecraft measurement and control.

At present, the control of autonomous operation device is often based on satellite positioning. The disturbance of the ionosphere will cause the positioning of autonomous operation device to be abnormal during operation, which cannot guarantee the accuracy of the device's work and reduce the efficiency of the device.

### SUMMARY

The present application provides a control method and apparatus for an autonomous operation system, a device, and a storage medium, to control the autonomous operation system based on ionosphere parameters.

According to one aspect of the present application, a control method for an autonomous operation system is provided. The method includes:

determining a position of the autonomous operation system, wherein the autonomous operation system includes a positioning apparatus; and
acquiring ionosphere parameters based on the position, and performing autonomous operation system control according to the ionosphere parameters.

Optionally, performing the autonomous operation system control according to the ionosphere parameters includes: determining device status according to the ionosphere parameters; acquiring task partitions of a device when the device status meets positioning requirements, and determining a priority of each task partition according to the ionosphere parameters; and determining a workflow of the device according to the priority of each task partition, and controlling the autonomous operation system based on the workflow.

Optionally, determining the device status according to the ionosphere parameters includes: determining whether the ionosphere parameters are less than a preset threshold, and if so, determining that the device status meets the positioning requirements, wherein the ionosphere parameters include current data and forecast data; and otherwise, determining that the device status does not meet the positioning requirements.

Optionally, determining the priority of each task partition according to the ionosphere parameters includes: extracting evaluation indicators from the ionosphere parameters, wherein the evaluation indicators include at least one of total electron content, a scintillation index, and an ionosphere index; acquiring a weight value and an extreme value corresponding to each evaluation indicator; and inputting the evaluation indicator, the weight value and the extreme value into a predefined normalization algorithm to generate the priority.

Optionally, determining the workflow of the device according to the priority of each task partition includes: generating work intervals based on a working time range and a working duration set by a user; grouping the priorities according to the work intervals to generate work groups, and generating a work list by arranging the work groups in an order of the work intervals from earliest to latest, wherein each work group includes priority indexes of task partitions having the same work interval; sequentially taking the work groups in the work list as target work groups, and acquiring work completion status of each task partition in each target work group; determining sub-workflows of the device according to the work completion status and the priority indexes; and combining the sub-workflows corresponding to the target work groups to generate the workflow.

Optionally, determining the sub-workflows of the device according to the work completion status and the priority indexes includes: taking task partitions with unfinished work completion status in the target work groups as alternative task partitions, taking task partitions with a highest priority index among the alternative task partitions as priority task partitions, and determining a number of the priority task partitions; determining whether the number of the priority task partitions is one, and if so, directly taking the priority task partition as the sub-workflow; and otherwise, acquiring remaining task amounts corresponding to the priority task partitions, taking a priority task partition with a largest remaining task amount as a target task partition, and taking the target task partition as the sub-workflow.

Optionally, after determining the device status according to the ionosphere parameters, the method further includes: generating, when the device status does not meet the positioning requirements, prompt information according to the device status; and issuing an alarm in a specified manner according to the prompt information.

According to another aspect of the present application, a control apparatus for an autonomous operation device is provided. The apparatus includes:

a position determination module, configured for determining a position of the autonomous operation device, wherein the autonomous operation device includes a positioning apparatus; and
an autonomous operation device control module, configured for acquiring ionosphere parameters based on the position, and performing autonomous operation device control based on the ionosphere parameters.

According to another aspect of the present application, an electronic device is provided. The electronic device includes:

at least one processor; and
a memory communicatively connected to the at least one processor; wherein
the memory stores computer programs executable by the at least one processor, and the computer programs, when executed by the at least one processor, cause the at least one processor to perform the control method for an autonomous operation system described in any embodiment of the present application.

According to another aspect of the present application, a computer-readable storage medium is provided. The computer-readable storage medium stores computer instructions, wherein the computer instructions, when executed by a processor, cause the processor to perform the control method for an autonomous operation system described in any embodiment of the present application.

It should be understood that the content described in this section is not intended to identify key or important features of the embodiments of the present application, nor is it intended to limit the scope of the present application. Other features of the present application will become readily understood from the following description.

## BRIEF DESCRIPTION OF THE DRAWINGS

In order to more clearly illustrate the technical solutions in the embodiments of the present application, the drawings needed to be used in the description of the embodiments will be briefly introduced below. Obviously, the drawings in the following description are only some embodiments of the present application. For those of ordinary skill in the art, other drawings can also be obtained based on these drawings without exerting creative efforts.

FIG. 1 is a flowchart of a control method for an autonomous operation system according to Embodiment 1 of the present application;
FIG. 2 is a flowchart of another control method for an autonomous operation system according to Embodiment 1 of the present application;
FIG. 3 is a schematic diagram of a work schedule according to Embodiment 1 of the present application;
FIG. 4 is a flowchart of another control method for an autonomous operation system according to Embodiment 2 of the present application;
FIG. 5 is a schematic structural diagram of a control apparatus for an autonomous operation system according to Embodiment 3 of the present application; and
FIG. 6 is a schematic structural diagram of an electronic device that implements a control method for an autonomous operation system according to an embodiment of the present application.

## DETAILED DESCRIPTION

In order to enable those skilled in the art to better understand the solutions of the present application, the technical solutions in the embodiments of the present application will be clearly and completely described below in conjunction with the accompanying drawings in the embodiments of the present application. Obviously, the described embodiments are only a part of the embodiments of the present application, but not all of them. Based on the embodiments in the present application, all other embodiments obtained by those of ordinary skill in the art without creative efforts should fall within the scope of protection of the present application.

It should be noted that the terms "first", "second", etc. in the description and claims of the present application and the above-mentioned drawings are used to distinguish similar objects and are not necessarily used to describe a specific order or sequence. It should be understood that the data so used are interchangeable under appropriate circumstances such that the embodiments of the present application described herein can be practiced in sequences other than those illustrated or described herein. In addition, the terms "comprise", "include" and "have" and any variations thereof are intended to cover non-exclusive inclusions, e.g., a process, method, system, product, or device that encompasses a series of steps or units and need not be limited to those explicitly listed. Those steps or elements may instead include other steps or elements not expressly listed or inherent to the process, method, product or device.

Embodiment 1

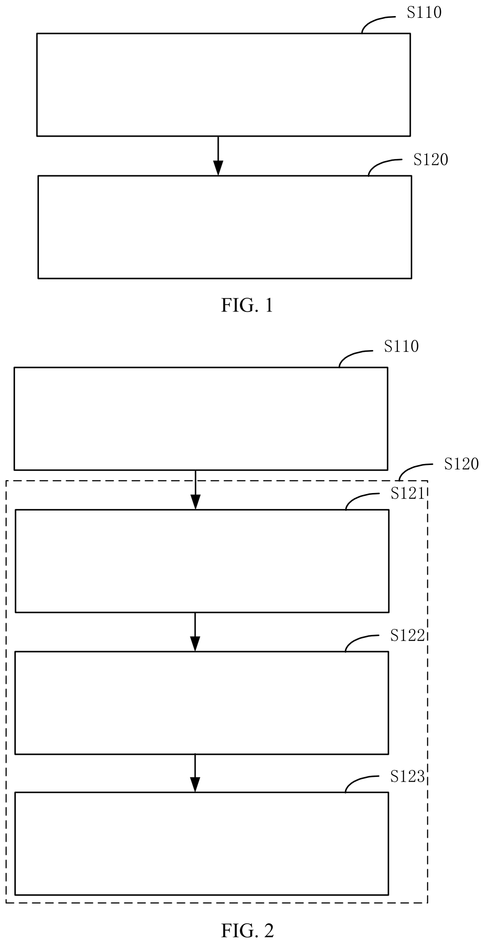

FIG. 1 is a flowchart of a control method for an autonomous operation system according to Embodiment 1 of the present application. This embodiment can be applied to the situation of controlling the operation of the autonomous operation system. The method can be executed by the control apparatus for the autonomous operation system. In some embodiments, the control apparatus for the autonomous operation system can be implemented in the form of hardware and/or software. In some embodiments, the control apparatus for the autonomous operation system can be configured in a computer. Further, the autonomous operation system includes an autonomous operation device and a docking station, wherein the autonomous operation device is configured to move autonomously within a preset working area and perform specific working tasks, and the docking station is configured to accommodate parking of the autonomous operation device. In this embodiment, the autonomous operation device is typically configured as a device that can operate autonomously outdoors, and is exemplarily an intelligent lawn mower. In some embodiments, the autonomous operation device may also be a smart sweeper, a smart mopping machine, a smart swimming pool cleaning machine, etc. The docking station is typically configured to be electrically connected to and charge the autonomous operation device. As shown in FIG. 1, the method includes the following steps.

In S110, a position of the autonomous operation system is determined, wherein the autonomous operation system includes a positioning apparatus.

In this embodiment, the autonomous operation system includes a first positioning apparatus that is specifically configured to determine the position of the autonomous operation device. In some embodiments, the autonomous operation system further includes a second positioning apparatus that is configured to determine the position of the docking station. In this embodiment, the positioning apparatus is configured as a base station with a carrier phase difference technology (Real-time kinematic, RTK) function, wherein the first positioning apparatus is configured as an RTK mobile station, and the second positioning apparatus is configured as an RTK fixed station. Determining the position of the autonomous operation device includes acquiring the position of the RTK mobile station and the position of the RTK fixed station.

It should be noted that usually the size of the working area is extremely small relative to the ionosphere, so in some embodiments, only the ionosphere parameters at the fixed station position can be used as the benchmark for controlling the autonomous operation system; in some embodiments, only the ionosphere parameters at the mobile station position can be used as the benchmark for controlling the autonomous operation system; in some embodiments, the ionosphere parameters at the fixed station position and the ionosphere parameters at the mobile station position can be used as the benchmark for controlling the autonomous operation system. In some embodiments with a large working area, the ionosphere parameters at the fixed station position and the ionosphere parameters at the mobile station position should be used as the benchmark for controlling the autonomous operation system.

In S120, ionosphere parameters are acquired based on the position, and autonomous operation system control is performed based on the ionosphere parameters.

In the above step, the ionosphere parameters are parameters that are usually acquired by ionospheric monitoring and reflect specific parameters of the ionosphere. Ionospheric monitoring uses space-based and ground-based detection devices to measure various characteristic parameters of the ionosphere, including ionospheric composition, total electron content, electron density, electron temperature, ion density, ion temperature, collision frequency, electric field, magnetic field, wind field detection, etc. In this embodiment, the ionosphere parameters include first-type parameters and second-type parameters (sudden changes or disturbances, difficult to predict). The first-type parameters are defined as parameters that reflect periodic or slow changes in the ionosphere, which are characterized by being easy to predict and typically include total electron content (TEC). The second-type parameters are defined as parameters that reflect sudden changes or disturbances in the ionosphere, which typically include the scintillation index (ScI). Furthermore, in this embodiment, the ionosphere parameters further include third-type parameters. The third-type parameters are defined as parameters that comprehensively reflect changes in the ionosphere, which are usually the parameter values that are obtained by calculating the first-type parameters and the second-type parameters based on a specific algorithm, typically including the ionosphere index (IoI).

FIG. 2 is a flowchart of a control method for an autonomous operation system according to Embodiment 1 of the present application. S120 mainly includes the following S121 to S123.

In S121, device status is determined according to the ionosphere parameters.

Optionally, determining the device status according to the ionosphere parameters includes: determining whether the ionosphere parameters are less than a preset threshold, and if so, determining that the device status meets the positioning requirements, wherein the ionosphere parameters include current data and forecast data; and otherwise, determining that the device status does not meet the positioning requirements.

Specifically, the device status includes whether the positioning requirements are met or not. The device status can be determined based on the ionosphere parameters of the mobile station and/or the fixed station; that is, the relationship between the ionosphere parameters and the preset threshold is determined. When the ionosphere parameters are less than the preset threshold, it can be determined that the device status meets the positioning requirements; and otherwise, it is determined that the device status does not meet the positioning requirements. The preset threshold can be determined based on the positioning accuracy requirements of the autonomous operation system, the hardware conditions and the positioning algorithm of the positioning apparatus.

It should be noted that the forecast data is usually the ionosphere parameter forecast data for a period of time in the future released by the space atmosphere monitoring agency, and the current data is usually the real-time monitoring data of the ionosphere parameters released by the space atmosphere monitoring agency. Forecast data and current data can also be calculated using appropriate mathematical models.

Exemplarily, the controller of the autonomous operation system may first divide, based on the forecast data, a specific time interval in the future into a first time period and a second time period. In some embodiments, the controller is configured on the autonomous operation device. In some other embodiments, the controller is configured on a docking station or as a remote controller connected to the autonomous operation system via a wireless network. During the first time period, the autonomous operation device is in a state that meets the positioning requirements; during the second time period, the autonomous operation device is in a state that does not meet the positioning requirements. A first operation strategy may be executed in the first time period according to the division result, and a second operation strategy may be executed in the second time period. The first operation strategy is defined as being able to perform a first action, and the second operation strategy is defined as being unable to perform the first action and/or performing a second action. In this embodiment, the first action exemplarily includes performing a lawn mowing task, and the second action exemplarily includes stopping walking. In some embodiments, the first action may further include at least one of establishing a map, correcting a map, calibrating a map, and walking that relies on satellite positioning, and the second action may further include walking that does not rely on satellite positioning. Further, in some embodiments, before executing the working task in the first time period, current data corresponding to the current moment is acquired, and whether to perform device control is determined based on the current data. Device control may be to perform preset actions set by the user, including issuing a reminder signal, establishing a map, correcting a map, and/or calibrating a map. The forecast data and the current data include at least one of the first-type parameters, the second-type parameters, and the third-type parameters.

Further, for the first time period and/or the second time period determined based on the forecast data, at least one of the following suggestions can be made to the user through a human-computer interaction module: the working time of the autonomous operation device is set within the first time period; the non-working time of the autonomous operation device is set within the second time period; the working time of the autonomous operation device set within the second time period is avoided; the autonomous operation device is allowed to establish, correct and/or calibrate a map when it meet the positioning requirements; the autonomous operation device is not allowed to establish, correct and/or calibrate a map when it does not meet the positioning requirements; the autonomous operation device is avoided from using boundary identification and/or path planning that relies on satellite positioning when it does not meet the positioning requirements; the autonomous operation device uses boundary identification that does not rely on satellite positioning, such as visual boundary identification when it does not meet the positioning requirements; the autonomous operation device uses path planning that does not rely on satellite positioning, such as random path patterns when it does not meet the positioning requirements. Users can input user instructions to the autonomous operation system according to the above suggestions, and the autonomous operation system controls the device according to the user instructions.

In some embodiments, in the second time period, considering the increase in satellite positioning error, the boundary of the working area can be contracted inward to a certain range to form a safety boundary, and the device can be allowed to operate within the safety boundary to avoid the device from traveling outside the boundaries of the working area due to positioning error.

Optionally, after determining the device status according to the ionosphere parameters, the method further includes: generating, when the device status does not meet the positioning requirements, prompt information according to the device status; and issuing an alarm in a specified manner according to the prompt information.

Specifically, when the device status does not meet the positioning requirements, the controller can generate prompt information according to the device status, and then issue, according to the prompt information, an alarm in a specified manner through the human-computer interaction module. The alarm is to prompt the user and facilitate the user to grasp the device in a timely manner. If the status does not meet the positioning requirements, the user can check, adjust or shut down the autonomous operation device to ensure the stability of the device. The specified manner includes voice or image. The voice can be broadcast through a speaker connected to the controller. For example, the voice content can be: the device status does not meet the positioning requirements. Images can be displayed through a user terminal connected to the controller to prompt the user.

In S122, when the device status meets the positioning requirements, task partitions of the device are acquired, and then a priority of each task partition is determined according to the ionosphere parameters.

In this embodiment, the priority is characterized by a priority index set. Optionally, determining the priority of each task partition according to the ionosphere parameters includes: extracting evaluation indicators from the ionosphere parameters, wherein the evaluation indicators include at least one of total electron content, a scintillation index, and an ionosphere index; acquiring a weight value and an extreme value corresponding to each evaluation indicator; and inputting the evaluation indicators, the weight values and the extreme values into a predefined normalization algorithm to generate the priority index set.

Specifically, when the device status meets the positioning requirements, the device can be controlled at this time. Taking the autonomous operation device as an intelligent lawn mower as an example, when a mowing map that needs to be completed is large and has many partitions, multiple task partitions will be generated. Different task partitions correspond to different working areas of the autonomous operation device, and task partitions can be set by users according to work needs. The controller can extract evaluation indicators from the ionosphere parameters, wherein the evaluation indicators include at least one of total electron content, a scintillation index, and an ionosphere index; then acquire a weight value and an extreme value corresponding to each evaluation indicator, wherein the extreme value includes a maximum value and a minimum value; and input the evaluation indicators, the weight values and the extreme values at different moments into a predefined normalization algorithm to generate a priority index set for each task partition. The priority index set contains priority indexes at different times, and exemplarily, the following formula (1) is used to calculate the priority index:

$$F = w_1 \cdot \left(1 - \frac{TEC - TEC_{min}}{TEC_{max} - TEC_{min}}\right) + w_2 \cdot \left(1 - \frac{ScI - ScI_{min}}{ScI_{max} - ScI_{min}}\right) + w_3 \cdot \left(1 - \frac{IoI - IoI_{min}}{IoI_{max} - IoI_{min}}\right) \tag{1}$$

wherein, $F$ represents the priority index, $w_1$ represents the weight value corresponding to the total electron content, $w_2$ represents the weight value corresponding to the scintillation index, $w_3$ represents the weight value corresponding to the ionosphere index, $TEC$ represents the total electron content, $TEC_{min}$ represents the minimum value of the total electron content, $TEC_{max}$ represents the maximum value of the total electron content, $ScI$ represents the scintillation index, $ScI_{min}$ represents the minimum value of the scintillation index, $ScI_{max}$ represents the maximum value of the scintillation index, $IoI$ represents the ionosphere index, $IoI_{min}$ represents the minimum value of the ionosphere index, and $IoI_{max}$ represents the maximum value of the ionosphere index.

In S123, a workflow is determined according to the priority of each task partition, and the autonomous operation system is controlled based on the workflow.

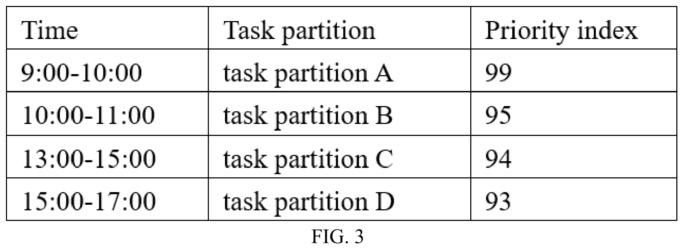

Specifically, the priority index of each task partition at each moment can be compared to determine the workflow. That is, the priority indexes of different partitions can be calculated for the user through the above formula (1), and the best partition and time divided work schedule can be pushed on the user interface. FIG. 3 is a schematic diagram of a work schedule reflecting the workflow according to an embodiment of the present application. FIG. 3 includes the latest task partitions corresponding to different times and the corresponding priority indexes. Users can choose to control the autonomous operation device directly according to this workflow, or they can adjust it according to their own needs.

According to the technical solutions of the embodiments of the present application, the ionosphere parameters are acquired, and the device status is determined based on the ionosphere parameters, such that the autonomous operation system can only operate when the positioning requirements are met, and the impact of ionospheric anomalies or disturbances on the autonomous operation system can be avoided to ensure the accuracy and the stability of the positioning of the autonomous operation system. Furthermore, when the autonomous operation device meets the positioning requirements, the priority of each corresponding task partition can be further calculated, the workflow is determined based on the priority, and the autonomous operation system is controlled to work according to the workflow. This ensures the accuracy of the work and improves the work efficiency.

Embodiment 2

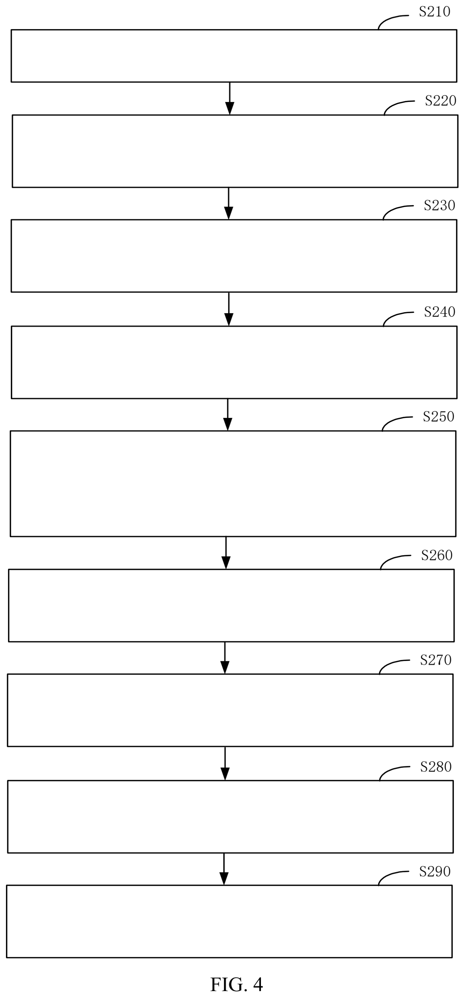

FIG. 4 is a flowchart of a control method for an autonomous operation system according to Embodiment 2 of the present application. Based on Embodiment 1, this embodiment adds a specific explanation of determining the workflow process of the device according to the priority of each task partition. As shown in FIG. 4, the method includes the following steps.

In S210, the position of the autonomous operation system is determined, wherein the autonomous operation system includes a positioning apparatus.

In S220, the device status is determined according to the ionosphere parameters.

Optionally, determining the device status according to the ionosphere parameters includes: determining whether the ionosphere parameters are less than a preset threshold, and if so, determining that the device status meets the positioning requirements, wherein the ionosphere parameters include current data and forecast data; and otherwise, determining that the device status does not meet the positioning requirements.

Optionally, after determining the device status according to the ionosphere parameters, the method further includes: generating, when the device status does not meet the positioning requirements, prompt information according to the device status; and issuing an alarm in a specified manner according to the prompt information.

In S230, when the device status meets the positioning requirements, task partitions of the device are acquired, and the priority of each task partition is determined according to the ionosphere parameters.

Optionally, determining the priority of each task partition according to the ionosphere parameters includes: extracting evaluation indicators from the ionosphere parameters, wherein the evaluation indicators include at least one of total electron content, a scintillation index, and an ionosphere index; acquiring a weight value and an extreme value corresponding to each evaluation indicator; and inputting the evaluation indicator, the weight value and the extreme value into a predefined normalization algorithm to generate the priority.

In S240, work intervals are generated according to a working time range and a working duration set by a user.

Exemplarily, the user can set or adjust the working time range and the working duration of the autonomous operation system as needed. For example, the working time range can be 8:00-11:00, and the working duration can be 1 hour; that is, according to the working duration and the working time range, the controller can divide the work intervals into 8:00-9:00, 9:00-10:00, and 10:00-11:00.

In S250, the priorities are grouped according to the work intervals to generate work groups, and a work list is generated by arranging the work groups in an order of the work intervals from earliest to latest, wherein each work group includes priority indexes of task partitions having the same work interval.

Specifically, the work group includes the priority indexes of the task partitions having the same work interval; that is, the work group includes the priority indexes of the task partitions at the same working time. For example, the work group includes a priority index 93 of a task partition A corresponding to a work interval 8:00-9:00, a priority index 85 of a task partition B corresponding thereto, a priority index 97 of a task partition C corresponding thereto, and a priority index 95 of a task partition D corresponding thereto. Then, a work list is generated by arranging the work groups in an order of the work intervals from earliest to latest. The determined work list is shown in Table 1 below.

Table 1

| Work interval | Task partition A | Task partition B | Task partition C | Task partition D |
|---|---|---|---|---|
| 8:00-9:00 | 93 | 85 | 97 | 95 |
| 9:00-10:00 | 90 | / | 98 | 93 |
| 10:00-11:00 | 99 | / | 95 | 99 |
| 13:00-14:00 | 98 | / | 86 | 98 |
| 14:00-15:00 | 96 | 91 | 77 | 94 |
| 15:00-16:00 | 87 | 91 | / | 91 |
| 16:00-17:00 | 89 | 91 | / | 97 |

wherein, the priority index of the task partition A corresponding to the work interval 8:00-9:00 is 93, the priority index of the task partition B corresponding thereto is 85, the priority index of the task partition C corresponding thereto is 97, and the priority index of the task partition D corresponding thereto is 95. "/" in the task partition B at a work interval 9:00-10:00 indicates that the device status corresponding to the work interval does not meet the positioning requirements; that is, the autonomous operation system is in the non-working time.

In S260, the work groups in the work list are taken as target work groups sequentially, and work completion status of each task partition is acquired in each target work group.

Specifically, each row of data in the work list is taken as a target work group in chronological order. For example, the work interval 8:00-9:00 is taken as the target work group, and the work completion status of each task partition at this time is determined. Work completion includes completed and unfinished work.

In S270, sub-workflows of the device are determined according to the work completion status and the priority indexes.

Optionally, determining the sub-workflows of the device according to the work completion status and the priority indexes includes: taking task partitions with unfinished work completion status in the target work groups as alternative task partitions, taking task partitions with the highest priority index among the alternative task partitions as priority task partitions, and determining the number of the priority task partitions; determining whether the number of the priority task partitions is one, and if so, directly taking the priority task partition as the sub-workflow; and otherwise, acquiring remaining task amounts corresponding to the priority task partitions, taking a priority task partition with the largest remaining task amount as a target task partition, and taking the target task partition as the sub-workflow.

Specifically, since the completed task partition does not require the autonomous operation system to continue working, when determining the sub-workflow, a task partition with unfinished work completion status in the target work group will be taken as the alternative task partition based on the work completion status. That is, for 8:00-9:00, although the task partition C has the highest priority index, because the work completion status of the task partition C is completed, the autonomous operation system no longer needs to work, that is, the controller will preferentially exclude the task partition C and only determine the sub-workflow from other unfinished task partitions.

Further, the controller may regard the task partitions with the highest priority index among the alternative task partitions as the priority task partitions, and determine the number of the priority task partitions. Then the controller determines whether the number of the priority task partitions is one, and if the number is only one, the priority task partition can be directly used as a sub-workflow. For example, for 8:00-9:00, the work completion status of the task partition C is completed. Then the alternative task partitions include the task partition A, the task partition B, and the task partition D. At this time, the task partition D with the highest priority index among the alternative task partitions is the priority task partition, and the number of the priority task partition is only one. At this time, the task partition D can be directly taken as the sub-workflow. If the number of the priority task partitions is not one, an area with more remaining tasks needs to be prioritized. That is, the controller may acquire the remaining task amount corresponding to each priority task partition, and then take a priority task partition with the largest remaining task amount as the target task partition, and take the target task partition as the sub-workflow. For example, for 10:00-11:00, the task partitions with the highest priority index include the task partition A and the task partition D. At this time, the remaining task amounts corresponding to the two priority task partitions can be further acquired. When the remaining task amount of the task partition A is 50% and the remaining task amount of the task partition D is 15%, it means that the task partition A has a larger remaining task amount. At this time, the controller may take the task partition A with the larger remaining task amount as the target task partition, and take the target task partition as the sub-workflow.

In S280, the sub-workflows corresponding to the target work groups are combined to generate the workflow.

In S290, the autonomous operation system is controlled based on the workflow. Specifically, since each target work group corresponds to a work interval with different working times, the sub-workflows corresponding to the target work groups can be combined to generate the workflow, and the workflow includes task partitions corresponding to different times. Finally, based on the workflow, the autonomous operation system can be controlled to work in different task partitions at different times to achieve control of the autonomous operation system.

Embodiment 3

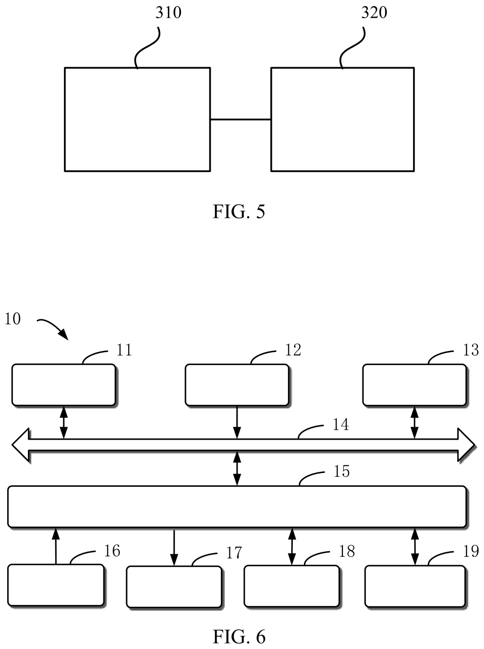

FIG. 5 is a schematic structural diagram of a control apparatus for an autonomous operation system according to Embodiment 3 of the present application. As shown in FIG. 5, the apparatus includes: a position determination module 310 that is configured for determining the position of the autonomous operation system, wherein the autonomous operation system includes a positioning apparatus; and
an autonomous operation system control module 320 that is configured for acquiring ionosphere parameters based on the position and performing autonomous operation system control based on the ionosphere parameters.

Optionally, the autonomous operation system control module 320 specifically includes: a device status determination unit that is configured for determining the device status according to the ionosphere parameters; a priority determination unit that is configured for acquiring task partitions of the device when the device status meets positioning requirements and determining the priority of each task partition according to the ionosphere parameters; and a workflow determination unit that is configured for determining the workflow of the device according to the priority of each task partition, and controlling the autonomous operation system based on the workflow.

Optionally, the device status determination unit is specifically configured for: determining whether the ionosphere parameters are less than a preset threshold, and if so, determining that the device status meets the positioning requirements, wherein the ionosphere parameters include current data and forecast data; and otherwise, determining that the device status does not meet the positioning requirements.

Optionally, the priority determination unit is specifically configured for: extracting evaluation indicators from the ionosphere parameters, wherein the evaluation indicators include at least one of total electron content, a scintillation index, and an ionosphere index; acquiring a weight value and an extreme value corresponding to each evaluation indicator; and inputting the evaluation indicators, the weight values, and the extreme values into a predefined normalization algorithm to generate priority index sets.

Optionally, the workflow determination unit specifically includes: a work interval generation sub-unit that is configured for generating each work interval according to a working time range and a working duration set by a user; a work group generation sub-unit that is configured for generating work groups by grouping the priority index sets according to the work intervals, and generating a work list by arranging the work groups in an order of the work intervals from earliest to latest, wherein each work group includes priority indexes of task partitions having the same work interval; a work completion status acquisition sub-unit that is configured for sequentially taking the work groups in the work list as the target work groups, and acquiring the work completion status of each task partition in each target work group; a sub-workflow determination sub-unit that is configured for determining sub-workflows of the devicebased on the work completion status and the priority indexes; and a workflow generation sub-unit that is configured for generating a workflow by combining the sub-workflows corresponding to the target work groups.

Optionally, the sub-workflow determination sub-unit is specifically configured for: taking task partitions with unfinished work completion status in the target work groups as alternative task partitions, taking task partitions with the highest priority index among the alternative task partitions as priority task partitions, and determining the number of the priority task partitions; determining whether the number of the priority task partitions is one, and if so, directly taking the priority task partition as a sub-workflow; and otherwise, acquiring the remaining task amount corresponding to each priority task partition, taking a priority task partition with the largest remaining task amount as the target task partition, and taking the target task partition as a sub-workflow.

Optionally, the autonomous operation system control module 320 further includes: an alarm prompt unit that is configured for generating, after determining the device status based on the ionosphere parameters, prompt information based on the device status when the device status does not meet the positioning requirements; and alarming in a specified manner based on the prompt information.

The control apparatus for an autonomous operation system according to the embodiments of the present application can execute the control method for an autonomous operation system according to any embodiment of the present application, and has functional modules and beneficial effects corresponding to the execution method.

Embodiment 4

FIG. 6 shows a schematic structural diagram of an electronic device 10 that can be configured to implement the embodiments of the present application. Electronic devices are intended to refer to various forms of digital computers, such as laptop computers, desktop computers, workstations, personal digital assistants, servers, blade servers, mainframe computers, and other suitable computers. Electronic devices may also represent various forms of mobile devices, such as personal digital assistants, cellular phones, smartphones, wearable devices (e.g., helmets, glasses, watches, etc.), and other similar computing apparatuses. The components shown herein, their connections and relationships, and their functions are examples only and are not intended to limit the implementation of the present application as described and/or claimed herein.

As shown in FIG. 6, the electronic device 10 includes at least one processor 11, and a memory communicatively connected to the at least one processor 11, such as a read-only memory (ROM) 12, a random-access memory (RAM) 13, etc., wherein the memory stores computer programs executable by the at least one processor. The processor 11 can perform various appropriate actions and processing according to computer programs stored in the read-only memory (ROM) 12 or loaded from a storage unit 18 into the random-access memory (RAM) 13. In the RAM 13, various programs and data required for the operation of the electronic device 10 can also be stored. The processor 11, the ROM 12 and the RAM 13 are connected to each other via a bus 14. An input/output (I/O) interface 15 is also connected to the bus 14.

Multiple components in the electronic device 10 are connected to the I/O interface 15, including: an input unit 16, such as a keyboard, a mouse, etc.; an output unit 17, such as various types of displays, speakers, etc.; a storage unit 18, such as a magnetic disk, an optical disk, etc.; and a communication unit 19, such as a network card, a modem, a wireless communication transceiver, etc. The communication unit 19 allows the electronic device 10 to exchange information/data with other devices through computer networks such as the Internet and/or various telecommunications networks.

The processor 11 may be a variety of general-purpose and/or dedicated processing components having processing and computing capabilities. Some examples of the processor 11 include, but are not limited to, a central processing unit (CPU), a graphics processing unit (GPU), various dedicated artificial intelligence (AI) computing chips, various processors running machine learning model algorithms, a digital signal processor (DSP), and any appropriate processor, controller, microcontroller, etc. The processor 11 executes various methods and processes described above, such as a control method for an autonomous operation system.

In some embodiments, a control method for an autonomous operation system may be implemented as computer programs, which are tangibly included in a computer-readable storage medium, such as the storage unit 18. In some embodiments, part or all of the computer programs may be loaded and/or installed onto the electronic device 10 via the ROM 12 and/or the communication unit 19. When the computer programs are loaded into the RAM 13 and executed by the processor 11, one or more steps of the control method for an autonomous operation system described above may be performed. Alternatively, in other embodiments, the processor 11 may be configured to perform a control method for an autonomous operationsystem through any other suitable means (e.g., by means of firmware).

Various embodiments of the systems and techniques described above may be implemented in digital electronic circuit systems, integrated circuit systems, field-programmable gate arrays (FPGAs), application-specific integrated circuits (ASICs), application-specific standard products (ASSPs), systems on a chip (SOC), complex programmable logic devices (CPLDs), computer hardware, firmware, software, and/or a combination thereof. These various embodiments may include implementation in one or more computer programs, which can be executed and/or interpreted on a programmable system including at least one programmable processor. The programmable processor may be a dedicated or general-purpose programmable processor that can receive data and instructions from a storage system, at least one input apparatus, and at least one output apparatus, and transmit the data and instructions to the storage system, the at least one input apparatus, and the at least one output apparatus.

The computer programs for implementing the method of the present application may be written in any combination of one or more programming languages. These computer programs may be provided to a processor of a general-purpose computer, a dedicated computer, or other programmable data processing apparatuses, such that the computer programs, when executed by the processor, cause the functions/operations specified in the flowcharts and/or block diagrams to be implemented. The computer programs may be executed entirely on the machine, partly on the machine, as a stand-alone software package, partly on the machine and partly on a remote machine or entirely on the remote machine or server.

In the context of the present application, a computer-readable storage medium may be a tangible medium that may contain or store a computer program for use by or in connection with an instruction execution system, apparatus, or device. Computer-readable storage media may include, but are not limited to, electronic, magnetic, optical, electromagnetic, infrared, or semiconductor systems, apparatuses or devices, or any suitable combination of the foregoing. Alternatively, the computer-readable storage medium may be a machine-readable signal medium. More specific examples of machine-readable storage media may include one or more wires based electrical connection, laptop disk, hard drive, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the above.

To provide interaction with a user, the systems and techniques described herein may be implemented on an electronic device equipped with: a display apparatus (e.g., a CRT (cathode ray tube) or an LCD (liquid crystal display) monitor) for displaying information to the user; and a keyboard and a pointing apparatus (e.g., a mouse or a trackball) through which a user can provide input to the electronic device. Other kinds of apparatuses may also be configured to provide interaction with the user; for example, the feedback provided to the user may be any form of sensory feedback (e.g., visual feedback, auditory feedback, or tactile feedback); and may be provided in any form (including acoustic input, speech input, or tactile input) to receive input from the user.

The systems and techniques described herein may be implemented in a computing system that includes back-end components (e.g., as a data server), or a computing system that includes middleware components (e.g., an application server), or a computing system that includes front-end components (e.g., a user's computer having a graphical user interface or web browser through which the user can interact with embodiments of the systems and techniques described herein), or a computing system that includes any combination of such back-end components, middleware components, or front-end components. The components of the system may be interconnected by any form or medium of digital data communication (e.g., a communication network). Examples of communication networks include: local area network (LAN), wide area network (WAN), blockchain network, and the Internet.

Computing systems may include clients and servers. Clients and servers are generally remote from each other and typically interact over a communication network. The relationship between clients and servers is created by computer programs running on corresponding computers and having a client-server relationship with each other. The server may be a cloud server, also known as a cloud computing server or a cloud host. It is a host product in the cloud computing service system to solve the problems of difficult management and weak business scalability in traditional physical hosts and VPS services.

It should be understood that various forms of the process shown above may be used, with steps reordered, added or deleted. For example, the steps described in the present application may be executed in parallel, sequentially, or in a different order, which is not limited herein as long as the desired results of the technical solutions of the present application can be achieved.

The above specific embodiments do not constitute a limitation on the scope of protection of the present application. It should be understood by those skilled in the art that various modifications, combinations, sub-combinations and substitutions are possible depending on design requirements and other factors. Any modifications, equivalent substitutions and improvements made within the spirit and principles of the present application shall all fall within the protection scope of the present application.

**Claims**

1. A control method for an autonomous operation system, comprising:

   determining a position of the autonomous operation system, wherein the autonomous operation system comprises a positioning apparatus;
   acquiring ionosphere parameters based on the position, and performing autonomous operation system control according to the ionosphere parameters.

2. The method according to claim 1, wherein performing autonomous operation system control according to the ionosphere parameters including:

   determining device status according to the ionosphere parameters;
   acquiring task partitions of a device when the device status meets positioning requirements, and determining a priority of each task partition according to the ionosphere parameters; and
   determining a workflow of the device according to the priority of each task partition, and controlling the autonomous operation system based on the workflow.

3. The method according to claim 2, wherein determining the device status according to the ionosphere parameters comprises:

   determining whether the ionosphere parameters are less than a preset threshold, and if so, determining that the device status meets the positioning requirements, wherein the ionosphere parameters comprise current data and forecast data; and
   otherwise, determining that the device status does not meet the positioning requirements.

4. The method according to claim 2, wherein determining the priority of each task partition according to the ionosphere parameters comprises:

   extracting evaluation indicators from the ionosphere parameters, wherein the evaluation indicators comprise at least one of total electron content, a scintillation index, and an ionosphere index;
   acquiring a weight value and an extreme value corresponding to each evaluation indicator; and
   inputting the evaluation indicator, the weight value and the extreme value into a predefined normalization algorithm to generate the priority.

5. The method according to claim 2, wherein determining the workflow of the device according to the priority of each task partition comprises:

   generating work intervals based on a working time range and a working duration set by a user;
   grouping the priorities according to the work intervals to generate work groups, and generating a work list by arranging the work groups in an order of the work intervals from earliest to latest, wherein each work group comprises priority indexes of task partitions having the same work interval;
   sequentially taking the work groups in the work list as target work groups, and acquiring work completion status of each task partition in each target work group;
   determining sub-workflows of the device according to the work completion status and the priority indexes; and
   combining the sub-workflows corresponding to the target work groups to generate the workflow.

6. The method according to claim 5, wherein determining the sub-workflows of the device according to the work completion status and the priority indexes comprises:

   taking task partitions with unfinished work completion status in the target work groups as alternative task partitions, taking task partitions with a highest priority index among the alternative task partitions as priority task partitions, and determining a number of the priority task partitions;

determining whether the number of the priority task partitions is one, and if so, directly taking the priority task partition as the sub-workflow; and

otherwise, acquiring remaining task amounts corresponding to the priority task partitions, taking a priority task partition having a largest remaining task amount as a target task partition, and taking the target task partition as the sub-workflow.

7. The method according to claim 3, wherein after determining the device status according to the ionosphere parameters, the method further comprises:

generating, when the device status does not meet the positioning requirements, prompt information according to the device status; and

issuing an alarm in a specified manner according to the prompt information.

8. A control apparatus for an autonomous operation system, comprising:

a position determination module, configured for determining a position of the autonomous operation system, wherein the autonomous operation system comprises a positioning apparatus; and

an autonomous operation system control module, configured for acquiring ionosphere parameters based on the position, and performing autonomous operation system control based on the ionosphere parameters.

9. An electronic device, comprising:

at least one processor; and

a memory communicatively connected to the at least one processor; wherein

the memory stores computer programs executable by the at least one processor, and the computer programs, when executed by the at least one processor, cause the at least one processor to perform the method as defined in any one of claims 1-7.

10. A computer storage medium, storing computer instructions, wherein the computer instructions, when executed by a processor, cause the processor to perform the method as defined in any one of claims 1-7.

S110

S120

FIG. 1

S110

S120

S121

S122

S123

FIG. 2

| Time | Task partition | Priority index |
|------|----------------|----------------|
| 9:00-10:00 | task partition A | 99 |
| 10:00-11:00 | task partition B | 95 |
| 13:00-15:00 | task partition C | 94 |
| 15:00-17:00 | task partition D | 93 |

FIG. 3

S210

S220

S230

S240

S250

S260

S270

S280

S290

FIG. 4

310    320

FIG. 5

10

11    12    13

14

15

16    17    18    19

FIG. 6

## INTERNATIONAL SEARCH REPORT

| International application No. |
| --- |
| **PCT/CN2023/111964** |

**A. CLASSIFICATION OF SUBJECT MATTER**

G05D1/02(2020.01)i

According to International Patent Classification (IPC) or to both national classification and IPC

**B. FIELDS SEARCHED**

Minimum documentation searched (classification system followed by classification symbols)

IPC：G05D

Documentation searched other than minimum documentation to the extent that such documents are included in the fields searched

Electronic data base consulted during the international search (name of data base and, where practicable, search terms used)

CNTXT: CNKI: WPABS; ENTXTC; ENTXT; VEN: 浙江白马科技有限公司, 车, 飞机, 无人, 自动, 自主, 作业, 机器人, 扫地机, 拖地机, 割草, 电离层, 定位, 导航, 位置, 地点, 误差, 精度, 精准, 准确, 正确, 信号, 强, 弱, 分区, 区域, 优先, 等级, 排序, GPS, GNSS, work machine, ionized, ionosphere, locate, navigation

**C. DOCUMENTS CONSIDERED TO BE RELEVANT**

| Category* | Citation of document, with indication, where appropriate, of the relevant passages | Relevant to claim No. |
| --- | --- | --- |
| X | US 2019072399 A1 (KOMATSU MANUFACTURING CO., LTD.) 07 March 2019 (2019-03-07)<br>description, paragraph [0123] | 1, 8-10 |
| X | CN 115166755 A (NANJING SUMEIDA INTELLIGENT TECHNOLOGY CO., LTD.) 11 October 2022 (2022-10-11)<br>description, paragraphs [0028]-[0031] | 1, 8-10 |
| A | CN 105849587 A (KOMATSU LTD.) 10 August 2016 (2016-08-10)<br>entire document | 1-10 |
| A | CN 108226965 A (POSITEC POWER TOOLS (SUZHOU) CO., LTD.) 29 June 2018 (2018-06-29)<br>entire document | 1-10 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **30 November 2023** | **11 December 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/111964**

| Patent document cited in search report | | | Publication date (day/month/year) | Patent family member(s) | | | Publication date (day/month/year) |
|---|---|---|---|---|---|---|---|
| US | 2019072399 | A1 | 07 March 2019 | US | 10801846 | B2 | 13 October 2020 |
| CN | 115166755 | A | 11 October 2022 | None | | | |
| CN | 105849587 | A | 10 August 2016 | None | | | |
| CN | 108226965 | A | 29 June 2018 | None | | | |

Form PCT/ISA/210 (patent family annex) (July 2022)